# EUROPEAN PATENT SPECIFICATION

(11) **EP 2 333 453 B1**
(45) Date of publication and mention of the grant of the patent: **27.06.2012**
(21) Application number: 10425329.9
(22) Date of filing: 08.10.2010
(51) Int. Cl.: F24J 2/52

(54) **Supporting framework and device for fastening solar panels to the supporting framework**
Tragrahmen und Vorrichtung zum Befestigen von Solarpaneelen auf dem Tragrahmen
Cadre porteur et dispositif de fixation pour fixer des panneaux solaires sur le cadre porteur

(30) Priority: 20.10.2009 IT BS20090189
(43) Date of publication of application: 15.06.2011
(73) Proprietor: Designeering S.r.l., 36075 Montecchio Maggiore (VI) (IT)
(72) Inventor: Beschi, Mosé Silvano, 36075 Montecchio Maggiore (VI) (IT)
(74) Representative: Sangiacomo, Fulvia

(56) References cited:
- WO-A1-03/098126
- WO-A1-2004/033927
- JP-A- 9 235 844
- JP-A- 2003 155 803
- US-B1- 6 414 237

## Description

### Field of the Invention

This invention concerns a supporting framework and a device for installing side by side flat photovoltaic or also thermal solar panels.

### State of the technique

The solar panels usually have a rectangular shape, and various mechanical systems are already well known for fastening them in position once resting on relative supporting framework to be installed on roofs or on the ground and which in general are sloping in order to keep said panels facing towards the sun.

According to the known technique, devices have been already provided and have been the subject to previous patent applications by the same applicant, designed for for a rapid and reversible connection and assembly of the vertical and horizontal linear elements contributing in the formation of scaffolding, framework and/or similar structures. Furthermore, the same devices were then implemented for their use also in the assembly of solid elements on relative supporting structures. For example, these devices have been configured and used for fastening tiles and the like for covering building façades, including glass panes designed for the formation of curtain walling, both for ventilation, and against solar radiation, guaranteeing the safety and stability of the resulting work and facilitating the stripping and the maintenance where required.
The state of the art is disclosed for example in document US 6 414 237 B1.

### Objective and Summary of the Invention

One objective of this invention is to provide an innovative connecting device able to simplify, facilitate and ensure the fastening side by side and/or in parallel lines of solar panels in particular photovoltaic collectors, on supporting framework positioned on the roofs or on the ground, also with different arrangements.

Another objective of the invention is to provide a connecting device suitable for fastening solar panels in the same way on differently configured supporting framework, both when the panels are oriented, placed near and substantially sloping vertically in the direction of their length, and when they are oriented near and basically sloping horizontally in the direction of their width.

A further objective of the invention is to provide a fastening device for the abovementioned use, made up of a limited number of simple and inexpensive components to make and easily convertible by the simple repositioning of one of its components to always be able to use it easily in the same way and also on a same supporting framework without any ties as regards to the vertical or horizontal layout of the solar panels to be fixed.

Said objectives and the evident advantages that derive from them are reached by a supporting framework and a device according to claim 1.

In an advantageous embodiment, the body of the fastening device has two parallel flanges basically connected between them in a U shape, the anchoring hooks are located along a base side of each of the flanges and the prismatic block can be fixed between said flanges according to two different arrangements for a double possibility of use of the device quite apart from the vertical or horizontal orientation of the panels to be blocked when operating.

The two supporting planes of the prismatic block are substantially on a level with the top margin of the flanges of the device body and on opposite sides of an intermediate rib, which rises above said flanges to a distance equal to about the width of the solar panels so as to be in a working position so that the latter can rest on the side.

So that the panels can be fixed on the supporting panels of the prismatic block, a blocking plate is provided which is fixed on the top of the intermediate rib, extends parallel to the supporting planes and is designed to engage on the panels, blocking them in an opposite direction to said supporting planes.

Preferably, the prismatic block has a square base and is provided with transversal bores or slots so as to be fixed between the parallel flanges of the body of the device in each of the two different positions or orientations turned at 90° one compared to the other, by using only one pair of bolts. In a first position the supporting planes and the intermediate rib are in a direction parallel with the flanges of the body of the device, and in a second position said supporting planes and the intermediate rib are in a direction transversal to the flanges of the body of the device. In this way, except for the body of the device, both solar panels in a vertical layout and solar panels in a horizontal layout can be positioned and fixed in place according to the terms defined above, on supporting framework with both vertical and horizontal current supporting bars. Furthermore, a screw facing towards and designed to prop itself on a supporting plane, can be associated with the prismatic block when only the other supporting plane becomes occupied by a panel to be blocked.

### Brief Description of the Drawings

The invention will however be explained in greater detail in the course of the description provided in reference to the enclosed drawings, in which:
Fig. 1 is an exploded view of the components of the fastening device;
Fig. 2 is a perspective view of the device assembled in a first operating position for fastening solar panels placed parallel to the bars of the supporting framework the device has to be connected to;
Fig. 3 is a side view of the device in Fig. 2 when connected to a bar of a framework supporting the panels;
Fig. 4 is a fastening stage of a panel to the device attached to a bar of the supporting framework;
Fig. 5 shows some solar panels in a vertical position and connected side by side on the supporting frame work;
Fig. 6 shows some solar panels in a horizontal position fastened on the supporting framework;
Fig. 7 is a perspective view of the assembled device in a second operating position for fastening solar panels placed transversely to the bars of the supporting framework the device will be connected to;
Fig. 8 shows a fastening phase of the panels to the device in a position as shown in Fig. 6; and
Fig. 9 is a side view of the device implemented for connecting a single panel on the external side of a supporting framework.

### Detailed Description of the Invention

In said drawings, the device of the invention is wholly indicated by 11, whereas 12 indicates the solar panels to be fixed to a supporting framework 13 with the use of said device.

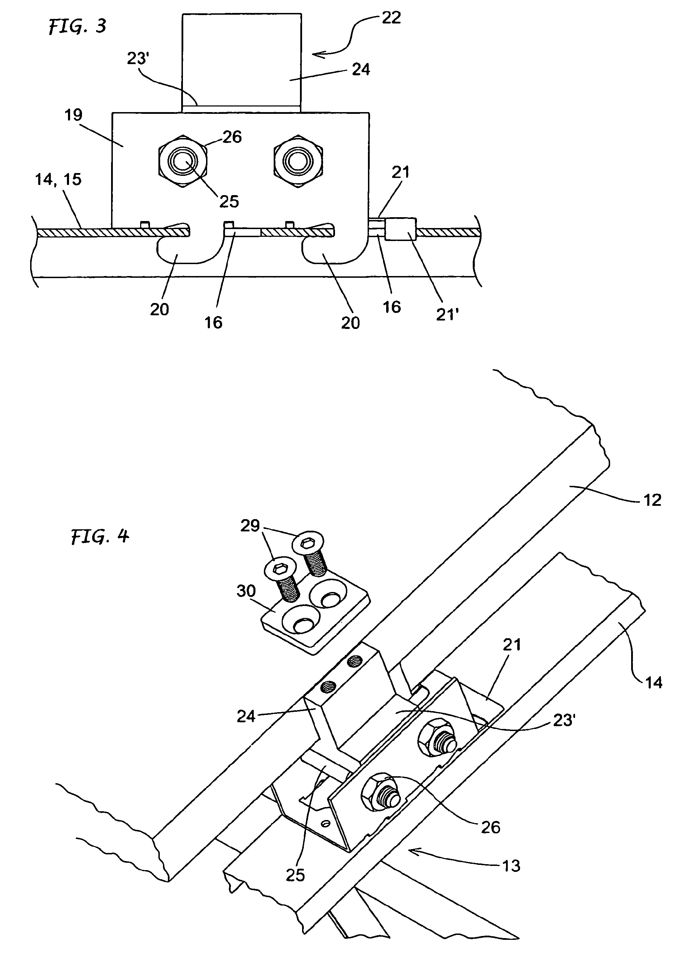

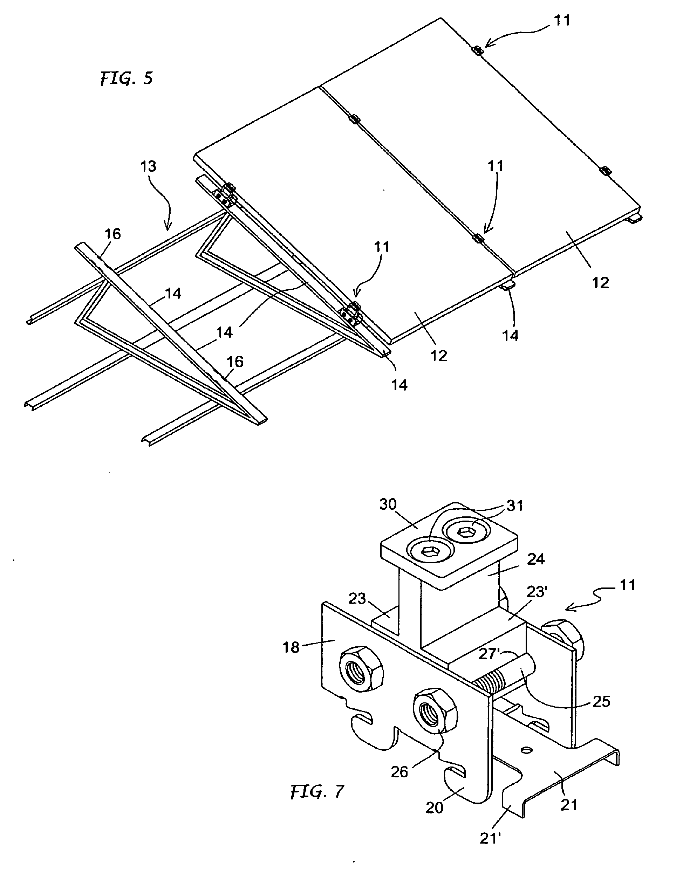

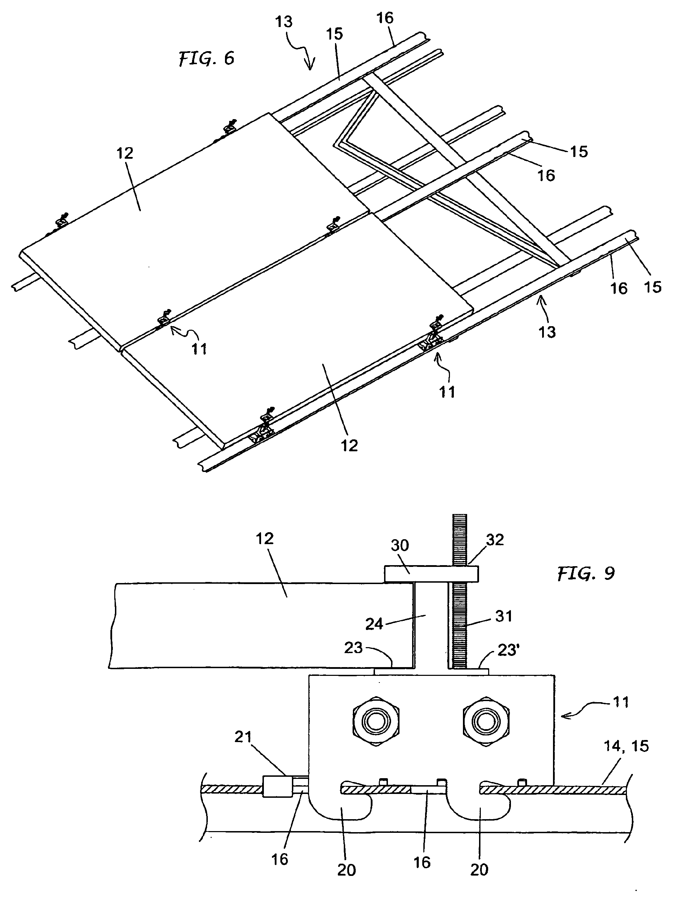

The solar panels, such as the photovoltaic collectors, have their own well known configurations. The supporting framework 13 can be configured depending on the position of the solar panels on flat roofs or on the ground, on sloping roofs, "shed" coverings, etc., and the layout, either vertical or horizontal, nevertheless sloping, of the panels themselves. The supporting framework 13 can have anchoring bars running vertically 14 - Figs. 4 and 5-, or anchoring bars running horizontally 15 -Fig. 6- on which to rest and fix the solar panels 12. Whether using one or the other type of framework 13, the panels can be positioned either vertically, in parallel with the vertical bars 14 in Fig. 5 or crosswise to the horizontal bars 15 in Fig. 6, that is to say either facing and sloping from the top downwards in the direction of their length, or horizontally, crossways to the vertical bars 14 or parallel to the horizontal bars 15, that is to say facing and sloping from the top downwards in the direction of their width. In any case bars 14 or 15 are provided frontally with several pairs of coupler slots 16.

As shown, the device 11 comprises a basically U-shape body 17, with two parallel flanges 18, connected from the base side by one or more transversal portions 18'.

Each flange 18 of said body 17 is provided with a pair of transversal bores 19 in line with those of the opposite flange. The flanges 18 along their bottom side have anchoring hooks 20, at least two pairs, designed to be inserted and linked in the pairs of slots 16 of the bars 14 or 15 of the supporting framework 13.

Between the two flanges 18 of the body of the device a stopping lever 21 is mounted, which is constrained to a transversal portion 18' and elastically moveable between an operating block position, wherein it prevents the longitudinal movements and helps to constrain the body 17 of the device to the respective bar 14 or 15 when the anchoring hooks 20 are inserted in the coupler slots 16, and an idle release position, which enables the device to be removed from the bar. For that purpose, said stopping lever 21 has two perpendicular wings 21' which, when the device 11 is coupled to a bar of the supporting framework, they click into the same slots 16 which receive a pair of hooks 20 of the flanges of the device (Fig. 3), preventing in this way every involuntary release and separation movement of the axial of the device. The release and detachment of the device from the bar 14 or 15 to which from time to time it is connected will in fact be possible only by operating on the stopping lever 21 that is by disengaging it from said slots 16.

The body 17 of the device 11 is associated with a prismatic block 22 configured to present two supporting planes 23, 23' from opposite sides of an intermediate rib 24, that extends vertically from the upper part of the block. The supporting planes 23, 23' are on a level or slightly above the upper margin of the flange 18 of the body of the device, whereas the intermediate rib 24 extends well above said flanges, with a thickness approximately the same as the solar panels 12 to be installed.

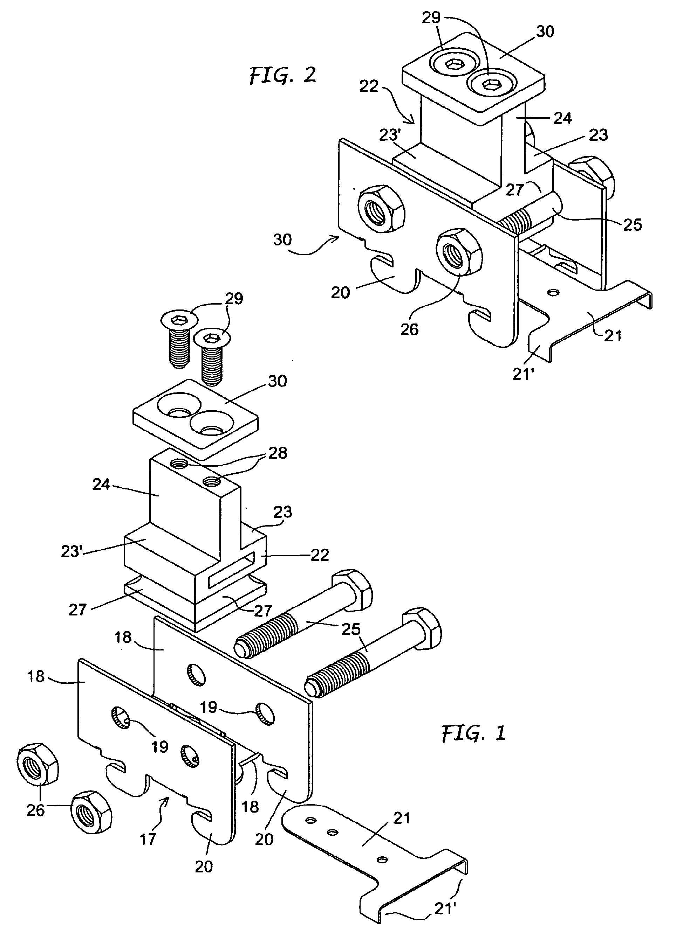

In the example shown, the block 22 is placed between the flanges 18 and is fixed to the body 17 of the device 11 by means of a pair of bolts 25 with relative nuts 26. The bolts 25 are housed in the coincident bores 19 of the flanges 18, extending in a transversal direction to the block 22. For its part, said block has, at least on two opposite sides which is orthogonal to the base of the body 13, a couple of semi-cylindrical slots 27 in which the legs of the bolts 23 are fixed as shown in Figs. 2, 4. As an alternative, instead of the semi-cylindrical slots, and though not shown, the block can be provided with transversal bores.

Preferably, the prismatic block 22 has a square base and is provided with a first pair of bores or slots 27 on two opposite faces and a second pair of bores or slots 27' on the other two opposite faces. In this way using the same blocking bolts 25 the block can be associated with and fixed between the flanges 18 of the body according to two different directions turning through 90° one compared to the other.

Thus, in a first orientation the supporting planes 23, 23' and the intermediate rib 24 above the block are facing in parallel with the flange 18 as shown in Figs. 2 and 4 for a first way of using the device; in a second orientation the supporting planes 23, 23' and the intermediate rib 24 above the block are in a transversal direction to the flanges 18 as shown in Figs. 6 and 7 for a second way of using the device.

Then, at the top of the intermediate rib 24, one or more threaded bores 28 are provided, facing towards the base of said body 17 of the device and designed to receive corresponding screws 29 for the fastening of a blocking plate 30 extending to the opposite sides of said intermediate rib parallel to the supporting planes 23, 23'.

For constraining the solar panels 12 to the supporting framework 13 the device 11 described above is used in plurality with others that are opportunely arranged, each of which is constrained to the anchoring bars 14 or 15 of said framework, making the relative hooks 20 engage with the anchoring slots 16 along said bars. The stopping lever 21 will, in this way prevent every possible involuntary release of the device from the bar it is connected to.

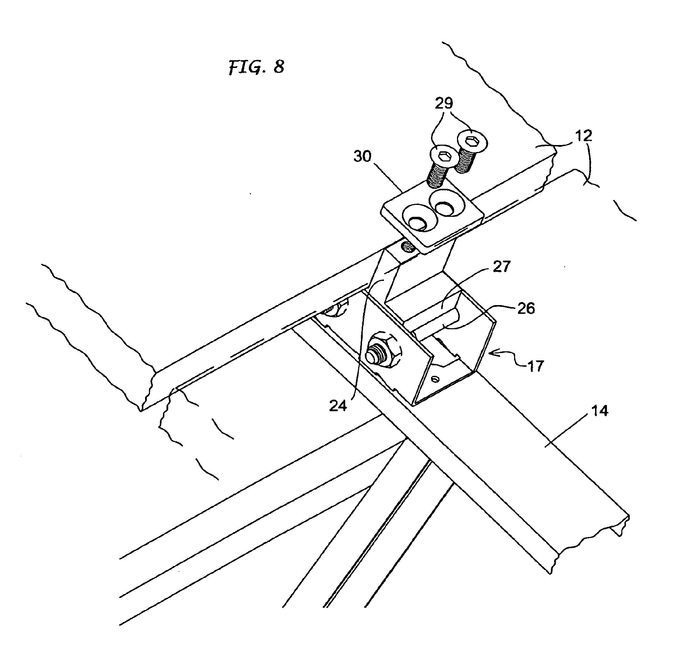

When from opposite parts of a same device, two side-by-side solar panels 12 become arranged, one of the panels is made to rest on the supporting plane 23 on one side of the intermediate rib 24 of the prismatic block 24 whereas the other panel is made to rest on the supporting plane 23' of the opposite side of said intermediate rib 24. Then it rests on the top of the intermediate rib 14, and is fixed by means of the respective screws 29, to the blocking plate 30 so that it engages above the top side of the panels, firmly blocking them on the supporting planes 23, 23'. This is attained both when the panels are placed in parallel and when placed transversely compared to the bars 14 or 15 of the framework -Figs. 5 and 6- both when the supporting planes 23, 23' and the intermediate rib 24 of the block 22 of each fastening device 11 are facing longitudinally or transversely compared to the flanges 18 of the body of the device -Figs. 4 and 8- and in the same way to the bar the device is anchored to.

When the device is associated with the external margin of a solar panel or the end panel of a plurality of panels, said margin is made to rest on a supporting plane of the block and constrained by means of the plate screwed to the top of the intermediate rib. Consequently the other supporting plane remains free and the plate can have the tendency to bend towards the free supporting plane, following the blocking force of the present panel. In order to avoid this possibility, the device can be provided with a screw 31 that screws into a threaded bore 32 provided in the plate 30 so as to constrain it to the free supporting plane, by propping the plate in this way as shown in Fig. 9.

## Claims

1. A supporting framework and a device for placing and fastening solar panels relative thereto, the supporting framework (13) having supporting bars (14, 15) running vertically or horizontally (14, 15) acting as a support for said solar panels in the direction of their thickness, and where the device comprises a body (17) provided with an anchoring hook (20) wherein each supporting bar (14. 15) of the supporting framework is equipped at the front with several coupler slots (16) designed to receive the anchoring hook (20) of the device body (17),
**characterized by** the fact that
the body (17) is provided with pairs of anchoring hooks (20) and at least one stopping lever (21), and in that each supporting bar (14, 15) of the supporting framework is equipped at the front with several pairs of coupler slots (16) designed to receive the pairs of anchoring hooks (20) of the device body (17), and in the fact that said body (17) is associated and fixed to a prismatic block (22) defining two supporting planes (23, 23') for the contiguous sides of two parallel solar panels and provided with blocking means (29, 30) for fastening said solar panels on said supporting planes.

2. A supporting framework and a device according to claim 1, **characterised by** the fact that said body has two parallel flanges (18) connected to each other in a basically U formation, by the fact that said anchoring hooks (20) being along one side of the base of said flanges (18) and by the fact that said prismatic block (22) is fixed between said flanges by means of bolts (25) with relative nuts (26), said bolts passing through said flanges into the bores or hollows (27) provided in the prismatic block (22).

3. A supporting framework and a device according to claims 1 and 2, **characterised by** the fact that the two supporting planes (23, 23') of the prismatic block are on opposite sides of an intermediate rib (24), that extends vertically from the upper part of the block, and in the fact that said supporting planes (23, 23') are basically on a level with the upper margin of the flange (18) of the body of the device, and that said intermediate rib (24) extends above said flange, consistent with more or less the same thickness of the solar panels (12) to be installed.

4. A supporting framework and a device according to the previous claims, **characterised by** the fact that the blocking means (30) for fixing the solar panels on the supporting planes X (23, 23') of the prismatic block (22) comprise a blocking plate (30) fixed to the summit and extending to opposite sides of said intermediate rib (24) parallel to said supporting planes (23, 23'), said plate being fixed to said intermediate rib and engaging with the panels in a direction opposite to said supporting planes.

5. A supporting framework and a device according to any of the previous claims, **characterised by** the fact that said prismatic block (22) has a fundamentally square base and bears a first couple of transversal slots (27) or bores on two opposite faces and a second couple of transversal slots or bores (27') on two other opposite faces to fix it, using the same bolts (25), between the parallel flanges (18) of the body of the device x according to two different directions turning through 90° one with respect to the other.

6. A supporting framework and a device according to claim 5, **characterised by** the fact that said block (22) can be positioned with a first direction in which the supporting planes (23, 23') and the intermediate rib (24) are in a direction parallel to the flanges (18) of the body of the device, and with a second direction in which said supporting planes (23, 23') and the intermediate rib (24) are in a direction transversal to the flanges (18) of the body of the device.

7. A supporting framework and a device according to any of the previous claims, **characterised by** the fact that a screw (31) is associated with the blocking plate (30) and faces towards, and is designed to prop itself on, a supporting plane of the prismatic block when only the other supporting plane is occupied by a panel to be blocked.

8. A supporting framework and a device according to any of the previous claims, **characterised by** the fact that the stopping lever (21) is flexible and provided with two perpendicular wings (21'), said lever being movable between a position of blocking of the device, in which said wings engage the anchoring hooks in a pair of coupler slots (16) of the supporting framework, and a position of release in which said wings are distant from said slots.

## Patentansprüche

1. Tragwerk und Vorrichtung zum Anordnen und Befestigen von entsprechenden Solarpaneele, wobei das Tragwerk (13) mit senkrechten oder horizontalen Tragstangen (14, 15) versehen ist, die als Träger für die genannten Solarpaneele in der Richtung ihrer Dicke dienen und wobei die Vorrichtung einen Körper (17) mit einem Verankerungshakens (20) umfasst, wobei jede Tragstange (14, 15) des Tragwerkes an der Frontseite mit mehreren Kopplungsschlitze (16) versehen ist, die zur Aufnahme des Verankerungshaken (20) des Vorrichtungskörpers (17) vorgesehen sind, **dadurch gekennzeichnet dass**,
der Körper (17) mit Verankerungshakenpaaren (20) und zumindest einem Arretierhebel (21) versehen ist und dassjede Tragstange (14, 15) des Tragwerkes an der Frontseite mit mehreren Kopplungsschlitzenpaaren (16) versehen ist, die zur Aufnahme der Verankerungshakenpaare (20) des Vorrichtungskörpers (17) vorgesehen sind und dass der genannte Körper (17) mit einem prismatischen Block (22), der zwei Tragflächen (23, 23') der nebeneinanderliegenden Seiten der zwei parallelen Solarpaneele definiert, verbunden und auf diesen fixiert ist und mit Verriegelungselemente (29, 30) zur Befestigung der genannten Solarpaneele auf den genannten Tragflächen versehen ist.

2. Tragwerk und Vorrichtung nach Anspruch 1, **dadurch gekennzeichnet dass** der genannte Körper zwei parallele Flansche (18) hat, die miteinander wesentlich U-förmig verbunden sind und dass die genannten Verankerungshaken (20) sich entlang einer Seite der Basis der genannten Flanschen (18) erstrecken und dass der genannte prismatische Block (22) zwischen den genannten Flanschen mittels Bolzen (25) mit entsprechenden Mütter (26) fixiert ist und wobei die genannten Bolzen durch Bohrungen oder Öffnungen (27) im prismatischen Block (22) durchgehen:

3. Tragwerk und Vorrichtung nach den Ansprüche 1 und 2, **dadurch gekennzeichnet dass** die zwei Tragflächen (23, 23') des prismatischen Blockes sich auf entgegengesetzten Seiten einer Zwischenrippe (24) befinden, die senkrecht von einem oberen Teil des Blockes abgeht, und dass die genannten Tragflächen (23, 23') wesentlich auf der gleichen Höhe des oberen Randes des Flansches (18) des Vorrichtungskörpers sind und dass die genannte Zwischenrippe (24) sich über des genannten Flansches erstreckt mit beinahe derselben Dicke des zu installierenden Solarpaneels (12) hat.

4. Tragwerk und Vorrichtung nach den vorhergehenden Ansprüchen, **dadurch gekennzeichnet dass** die Verriegelungselemente (30) zur Fixierung des Solarpaneels auf den Tragflächen (23, 23') des prismatischen Blockes (22) eine zu den genannten Tragflächen (23, 23') parallelen Verriegelungsplatte (30) umfassen, die an der Spitze der gegenüberliegenden Seiten der genannten Zwischenrippe (24) fixiert ist, und sich von diesen erstreckt, wobei die genannte Platte mit den Paneelen in einer zu den Tragflächen entgegengesetzten Richtung fixiert ist.

5. Tragwerk und Vorrichtung nach einem der vorhergehenden Ansprüche, **dadurch gekennzeichnet dass** der genannte prismatische Block (22) eine wesentlich quadratische Basis hat und ein erstes Querschlitzenpaar (27) oder Bohrungen an zwei gegenüberliegenden Wänden aufweist und ein zweites Querschlitzenpaar oder Bohrungen (27') an den anderen zwei gegenüberliegenden Wänden aufweist, um diesen durch die selben Bolzen (25) zwischen den parallelen Flanschen (18) des Vorrichtungskörpers in zwei verschiedenen Richtungen zu fixieren, die zueinander mit einem Winkel von 90° gedreht sind.

6. Tragwerk und Vorrichtung nach Anspruch 5, **dadurch gekennzeichnet dass** der genannte Block (22) in einer ersten Richtung gestellt werden kann, in der die Tragflächen (23, 23') und die Zwischenrippe (24) in einer parallelen Richtung zu den Flanschen (18) des Vorrichtungskörper sind und dass dieser in einer zweiten Richtung gestellt werden kann, in der die genannten Tragflächen (23, 23') und die Zwischenrippe (24) in einer Querrichtung zu den Flanschen (18) des Vorrichtungskörpers sind.

7. Tragwerk und Vorrichtung nach einem der vorhergehenden Ansprüche, **dadurch gekennzeichnet dass** eine Schraube (31) mit der Verriegelungsplatte (30) verbunden ist und einer Tragfläche des prismatischen Blockes zugewandt ist und dazu vorgesehen ist sich auf dieser zu stützen, nur wenn die andere Tragfläche mit einem zu verrastenden Paneel besetzt ist.

8. Tragwerk und Vorrichtung nach einem der vorhergehenden Ansprüche, **dadurch gekennzeichnet dass** der Arretierhebel (21) flexibel ist und mit zwei senkrechten Flügel (21') versehen ist, wobei der genannte Hebel zwischen einer verriegelten Stellung der Vorrichtung, in der die genannten Flügel die Verankerungshaken in einem Kopplungsschlitzenpaar (16) des Tragwerkes einführen und einer entrasteten Stellung, in der die genannten Flügel von den genannten Schlitzen entfernt sind, bewegbar ist.

## Revendications

1. Châssis de support et dispositif pour placer et fixer des panneaux solaires en relation à ceux-ci, le châssis de support (13) ayant des barres de support (14, 15) qui s'étendent verticalement ou horizontalement qui font fonction de support pour lesdits panneaux solaires dans la direction de leur épaisseur, et où le dispositif comprend un corps (17) muni d'un crochet d'ancrage (20) dans lequel chacune barre de support (14, 15) du châssis de support est munie en position frontale de différentes fentes de couplement (16) projetées pour recevoir le crochet d'ancrage (20) du corps (17) du dispositif,
**caractérisé en ce que** le corps (17) est muni de paires de crochets d'ancrage (20) et d'au moins un levier d'arrêt (21), et **en ce que** chaque barre de support (14, 15) du châssis de support est équipée en position frontale de différentes paires de fentes de couplement (16) projetées pour recevoir les paires de crochets d'ancrage (20) du corps (17) du dispositif, et **en ce que** ledit corps (17) est associé et fixé à un bloc prismatique (22) définissant deux plans de support (23, 23') pour les côtés adjacents de deux panneaux solaires parallèles et muni de moyens de blocage (29, 30) pour fixer lesdits panneaux solaires sur lesdits plans de support.

2. Châssis de support et dispositif selon la revendication 1, **caractérisé en ce que** ledit corps a deux brides parallèles (18) connectées l'une à l'autre et qui forment essentiellement une U, **en ce que** lesdits crochets d'ancrage (20) se trouvent le long d'un côté de la base desdites brides (18) et **en ce que** ledit bloc prismatique (22) est fixé entre lesdites brides par des boulons (25) avec des relatifs écrous (26), lesdits boulons passant à travers lesdites brides pour entrer dans les trous ou cavités (27) fournis dans le bloc prismatique (22).

3. Châssis de support et dispositif selon les revendications 1 et 2, **caractérisé en ce que** les deux plans de support (23, 23') du bloc prismatique se trouvent sur des côtés opposés d'une nervure intermédiaire (24), qui s'étend verticalement de la partie supérieure du bloc, et **en ce que** lesdits plans de support (23, 23') se trouvent essentiellement au niveau du bord supérieur de la bride (18) du corps du dispositif, et **en ce que** ladite nervure intermédiaire (24) s'étend au-dessus de ladite bride, avec approximativement le même épaisseur des panneaux solaires (12) qui doivent être installés.

4. Châssis de support et dispositif selon les revendications précédentes, **caractérisé en ce que** les moyens de blocage (30) pour fixer les panneaux solaires sur les plans de support (23, 23') du bloc prismatique (22) comprennent une plaque de blocage (30) fixée au sommet et qui s'étend vers des côtés opposés de ladite nervure intermédiaire (24) parallèles auxdits plans de support (23, 23'), ladite plaque étant fixée à ladite nervure intermédiaire et engagée avec les panneaux dans une direction opposée auxdits plans de support.

5. Châssis de support et dispositif selon quelconque des revendications précédentes, **caractérisé en ce que** ledit bloc prismatique (22) a une base essentiellement carrée et supporte une première couple de fentes transversales (27) ou trous sur deux faces opposées et une deuxième couple de fentes ou trous transversaux (27') sur deux autres faces opposées pour le fixer, en utilisant les mêmes boulons (25), entre les brides parallèles (18) du corps du dispositif selon deux différentes directions qui tournent de 90° l'une par rapport à l'autre.

6. Châssis de support et dispositif selon la revendication 5, **caractérisé en ce que** ledit bloc (22) peut être positionné avec une première direction dans laquelle les plans de support (23, 23') et la nervure intermédiaire (24) ont une direction parallèle aux brides (18) du corps du dispositif, et avec une deuxième direction dans laquelle lesdits plans de support (23, 23') et la nervure intermédiaire (24) ont une direction transversale par rapport aux brides (18) du corps du dispositif.

7. Châssis de support et dispositif selon quelconque des revendications précédentes, **caractérisé en ce que** une vis (31) est associée à la plaque de blocage (30) et est dirigée vers, et est projetée pour s'appuyer sur, un plan de support du bloc prismatique quand seulement l'autre plan de support est occupé par un panneau qui doit être bloqué.

8. Châssis de support et dispositif selon quelconque des revendications précédentes, **caractérisé en ce que** le levier d'arrêt (21) est flexible et muni de deux ailes perpendiculaires (21'), ledit levier étant mobile entre une position de blocage du dispositif, dans lequel lesdites ailes s'engagent avec les crochets d'ancrage dans une paire de fentes de couplement (16) du châssis de support, et une position de dégagement dans laquelle lesdites ailes sont distantes desdites fentes.
